# NEW EUROPEAN PATENT SPECIFICATION

(11) **EP 3 218 766 B2**
(45) Date of publication and mention of the opposition decision: **11.01.2023**
(45) Mention of the grant of the patent: 20.05.2020
(21) Application number: 15794839.9
(22) Date of filing: 27.10.2015
(51) Int. Cl.: G02F 1/1333, B32B 7/12

(54) **METHOD FOR OPTICAL BONDING AND A DISPLAY**
VERFAHREN FÜR OPTISCHES BONDEN UND ANZEIGE
METHODE POUR COLLAGE OPTIQUE ET AFFICHEUR

(30) Priority: 14.11.2014 MY PI2014703409
(43) Date of publication of application: 20.09.2017
(73) Proprietor: Robert Bosch GmbH, 70442 Stuttgart (DE)
(72) Inventor: CHAN, Yau Kok, Bayan Lepas, Penang, 11900 (MY); LEIMEISTER, Manfred, 31061 Alfeld (DE)
(86) International application number: PCT/EP2015/074855
(87) International publication number: WO 2016/074917

(56) References cited:
- WO-A1-2014/061478
- DE-A1-102004 040 508
- DE-A1-102011 005 379
- DE-A1-102012 112 386
- DE-A1-102012 224 352
- JP-A- 2006 058 753
- JP-A- 2009 093 158
- US-A1- 2011 187 960
- US-A1- 2011 304 812
- US-A1- 2015 351 272

## Description

### Field

The present invention relates to a method for optical bonding, in particular, forbonding of a cover with non-uniform surface to a display substrate.

### Background

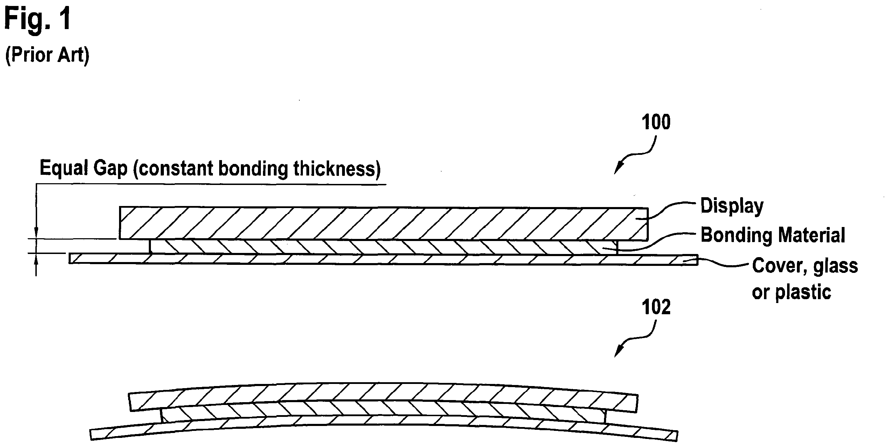

With reference to Fig. 1, in optical bonding of a display (also called a display assembly) with a cover glass or plastic, prior art is typically limited to bonding of substrates with an equal gap between them, such as a flat display substrate to a flat piece of cover glass (100), and a curved display substrate to a curved cover glass (102). Examples of such applications are in consumer electronics, such as smart phone and tablet, central display and industrial display.

Document WO 2014/061478 A1 discloses an adhesive layer-equipped transparent surface material that is suitable for protecting a display panel and a display that comprises said surface material. Document JP 2009-93158 A describes a display, the display comprising a cover with a decorative layer and a levelling layer. Said levelling layer eliminates level differences occurring due to the thickness of the decorative layer. US 2011/0304812 A1 discloses a display comprising a display substrate, a flat cover and a transparent filling layer. A dam disposed between the display substrate and the flat cover is used to control the liquid transparent filling layer during the fabrication process.

Document US 2015/0341272 A1 discloses an electro-optical display assembly comprising an electro-optical display, a frame and a transparent cover, wherein a surface of the transparent cover is curved. Document DE 10 2011005 379 A1 discloses a method to produce an opto-electrical apparatus.

Document US 2011/0187960 A1 discloses a display device that comprises: a display panel; and a panellike member bonded to the display panel with an adhesive made of an ultraviolet curable resin.

### Brief Description of the Drawings

Examples of the present disclosure will be better understood and readily apparent to oneskilled in the art from the following written description, by way of example only and in conjunction with the drawings, in which:
Fig. 1 shows a cross-sectional side view of substrates with an equal gap between them subjected to optical bonding according to prior art.
Fig. 2 shows an example of substrates with unequal gap between them subjected to optical bonding yet not part of the present invention.
Fig. 3 shows an example of. substrates with unequal gap between them subjected to optical bonding yet not part of the present invention.
Fig. 4 shows a dam (support member) according to a first example in the present disclosure yet not of the present invention.
Fig. 5 shows a dam (support member) according to a second example in the present disclosure yet not of the present invention.
Fig. 6 shows a dam (support member) adhered to a cover according to an example in the present disclosure yet not of the present invention.
Fig. 7 illustrates dispensing of a bonding material onto a cover according to an example in the present disclosure.
Fig. 8 shows a display made according to an example in the present disclosure yet not of the present invention.
Fig. 9 illustrates a method for avoiding bubbles according to an example in the present disclosure.

### Summary

The inventive method for optical bonding is characterized by the features of claim 1. In accordance with an aspect of an example of the present disclosure and invention, there is provided a method for optical bonding, the method comprising: applying a bonding material on a cover with non-uniform surface to adhere the cover to a display substrate to form a display, the cover comprising at least one support member for supporting the bonding material disposed between the display substrate and the cover.

In accordance with another aspect of an example of the present disclosure yet not of the present invention, there is provided an apparatus for optical bonding, the apparatus comprising: a bonding material dispenser for applying a bonding material on a cover with non-uniform surface to adhere the cover to a display substrate to form a display, the cover comprising at least one support member for supporting the bonding material disposed between the display substrate and the cover.

In accordance with yet another aspect of an example of the present disclosure yet not of the present invention, there is provided a display comprising: a display substrate; a cover with non-uniform surface adhered to the display substrate by a bonding material; at least one support member disposed on the cover for supporting the bonding material disposed between the display substrate and the cover.

### Description

With displays gaining more application in vehicle cabins and growing in size, such as instrument cluster and central information display displaying speedometer, odometer, fuel consumption etc. of a vehicle, there is a need to fit a display to a vehicle dash board (i.e. a cover), in 2-dimensions and 3-dimensions for styling and ergonomic reasons. Therefore, future state of the art will likely be optical bonding of covers with non-uniform surface to a display substrate for fitting into a vehicle interior. As customization of a display surface is expensive, providing optical bonding of a cover with non-uniform surface on a flat display substrate with or without varying bonding thickness will offer a competitive solution. Such procedure can also be used for all electronic applications (e.g. consumer electronics, military applications, ... etc.). A display described herein refers to a Liquid Crystal Display (LCD), Light Emitting Diode Display, Plasma Display and the like that are capable of displaying, for instance, video images.

A problem to be solved by an example of the present disclosure for optical bonding of a flat display substrate to a cover with non-uniform surface is to create a varying bonding thickness that fills up a gap between a flat display substrate and a non-uniform cover. It is appreciated that the display substrate may have non-uniform surface instead of a flat surface in another example.

An improvement provided by the example of the present disclosure is to provide feasibility to create a bonding thickness with, for example, a silicon or silicon composite with fast room temperature cure, which can provide varying thickness according to a gap created when a flat display substrate is to be adhered to a non-uniformly shaped cover (or non-uniform cover, or cover with non-uniform shape). It is appreciated that known processes do not provide possibility to accommodate such varying bonding thickness. Therefore, the method for optical bonding described herein is applicable to all combinations of bonding or adhering of a cover (e.g. glass or plastic) to a display substrate.

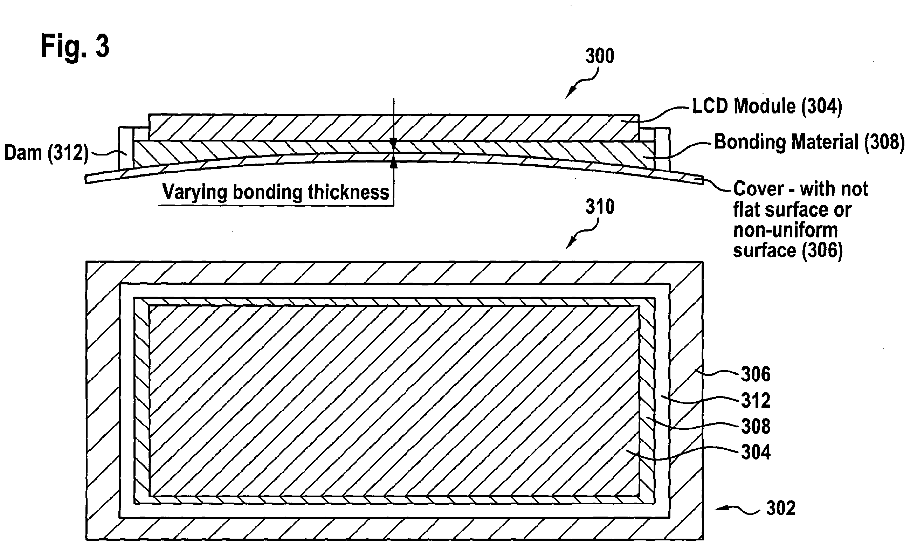

The improvement includes the presence of at least one dam (or called a support member), either as a stick-on or built-in member on the non-uniform cover to be adhered to the flat display substrate. The dam is used to contain or support the bonding material disposed between the cover to enable the bonding material to maintain a desired shape when it fills the gap between the display substrate and the cover. The shape of the bonding material allows the flat display substrate to conveniently rest over the bonding material as it is adhered to the cover. If the bonding material is a liquid adhesive, the dam can prevent the bonding material from spillage, guide its flow, assume the desired shape and subsequently solidify after curing to adhere the display substrate to the cover. The dam can be formed using a fast room temperature cure silicon or silicon composite, or any other suitable material with sufficient strength and relatively fast curing ability. It is appreciated that the dam can comprise more than one support member placed or assembled to be adjacent to each other to form the dam or it can be just one support member in the form of a rectangular shape, as can be seen in at least Fig. 3 of the present disclosure.

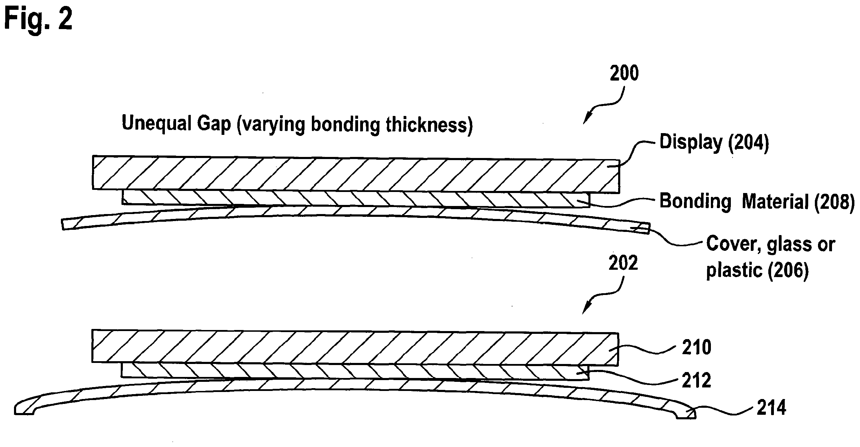

Fig. (figure) 2 illustrates cross-sectional side views of two examples 200, 202 of substrates, namely display substrates 204, 210 and non-uniform covers 206, 214, which can be glass or plastic, or any other suitable material, with unequal gap or varying bonding thickness between them that is subjected to optical bonding. Display substrates 204, 210 are each bonded to the respective covers 206, 214 by respective bonding materials 208, 212, which can be any suitable type of adhesive, including liquid adhesives, suitable for bonding the display substrates 204, 210 to the covers 206, 214. In the examples shown in Fig. 2, no dam is present.

An optical bonding concept of an example of the present disclosure is illustrated by Fig. 3.

Fig. 3 shows a cross-sectional side view 300 of a display 310 (also called a display assembly) having an LCD module (or display substrate) 304 adhered to a cover 306 with a not flat (non-flat) or non-uniform surface using a bonding material 308. Fig. 3 also shows a top view 302 of the display 310.

The concept is to install or to create at least one dam 312 that will support the bonding material 308 for bonding the display substrate 304, which is typically flat, to a non-flat cover or non-uniform cover 306, which is typically glass or plastic, to accommodate varying bonding thickness resulting from non-uniform gaps between the display substrate 204 and the non-uniform cover 306.

In the example of Fig. 3, the bonding material is a liquid adhesive comprising a two-component silicon, which has fast curing ability at room temperature upon being mixed, typically within less than 10 minutes.

In Fig. 3, the dam 312 is a solid rectangular shaped structure disposed on the cover 306. As the cover 306 has a non-uniform surface, in this case, curved, the bonding material 308 will have varying bonding thickness on the cover 306. The dam 312 advantageously supports the bonding material 308 disposed between the display substrate 304 and the cover 306.

With reference to Fig. 3 it is appreciated that a type of display 310 having a cover 306 with non-uniform surface can be provided. The display 310 comprises the display substrate 304; the cover 306 with non-uniform surface adhered to the display substrate 304 by the bonding material 308; and at least one support member i.e. the dam 312 disposed on the cover 306 for supporting the bonding material 308 disposed between the display substrate 304 and the cover 306.

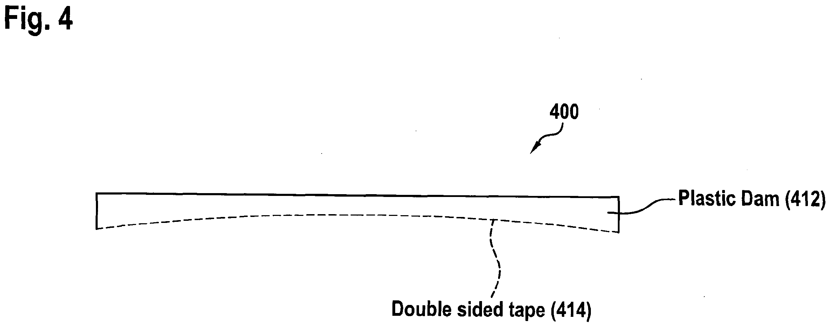

Fig. 4 shows a side view 400 of an example of a plastic dam 412 with a lower portion having double sided tape 414 adhered on it. The lower portion of the plastic dam 412 has a non-uniform surface, which is deliberately profiled in a manner to conform to the profile of a non-uniform surface of a cover (e.g. 306 in Fig. 3) that the plastic dam 412 is to be adhered to. It is appreciated that the material of the dam is not limited to plastic. It can also be a silicon based material and any other suitable material. It is appreciated that other types of adhesive other than double sided tape may also be used.

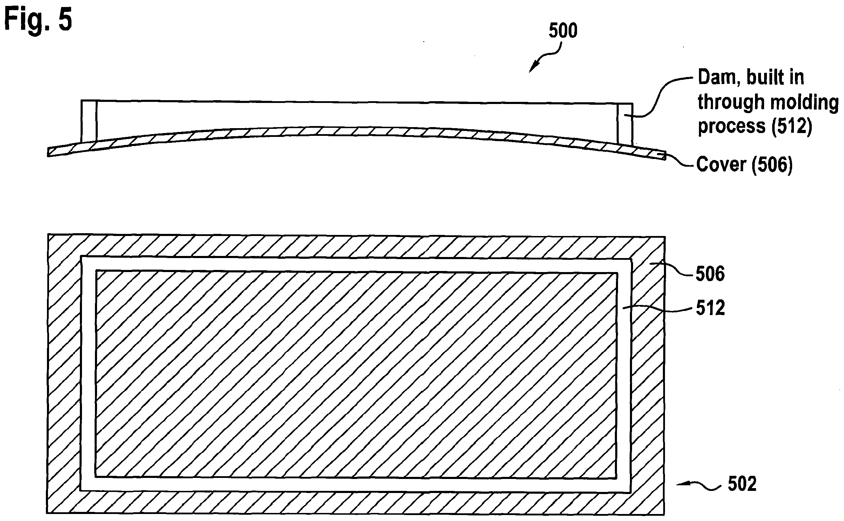

Fig. 5 shows a side view 500 of an example of a dam 512 configured to be built-in to or integral with a non-uniform surface of a cover 506 through a molding process. The top view 502 of the dam 512 disposed on the cover 506 is also shown in Fig. 5.

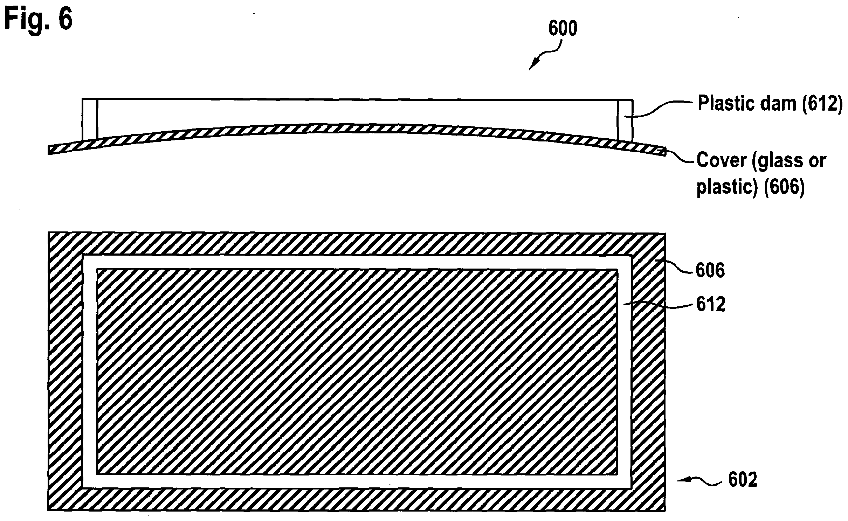

Fig. 6 shows a side view 500 illustrating sticking or adhering a plastic dam 612, for example, such as the dam 412 in Fig. 4, onto a non-uniform surface of a cover 606. The top view 602 of the dam 612 disposed on the cover 606 is also shown in Fig. 6. The adhering of the plastic dam 612 can be achieved with the help of a placement member (not shown in Fig. 6), for example, one or more robotic grippers, that can grip the plastic dam 612 and position the plastic dam 612 to sit on the cover 606.

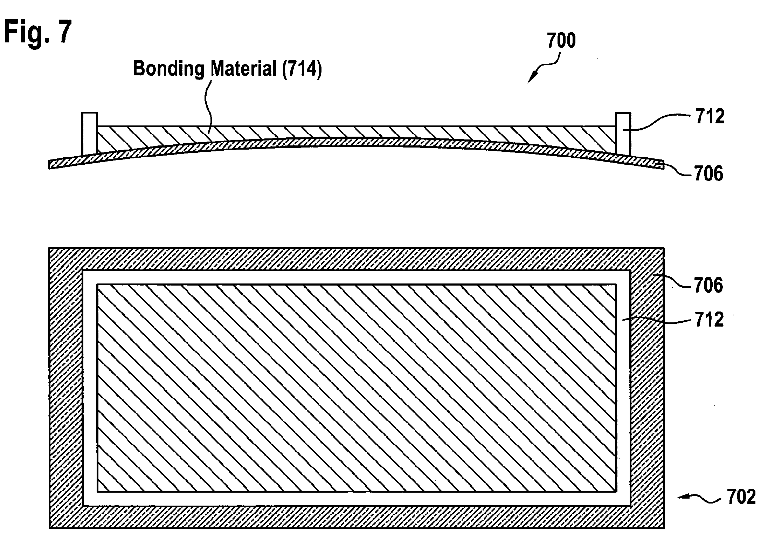

Fig. 7 shows a side view 700 and a top view 702 illustrating applying a bonding material 714, in this case, dispensing the bonding material 714, which is in liquid form and is silicon based, onto a cover 706 (in this case, a glass cover) with non-uniform surface. The silicon based bonding material 714 is supported or contained by a dam 712.

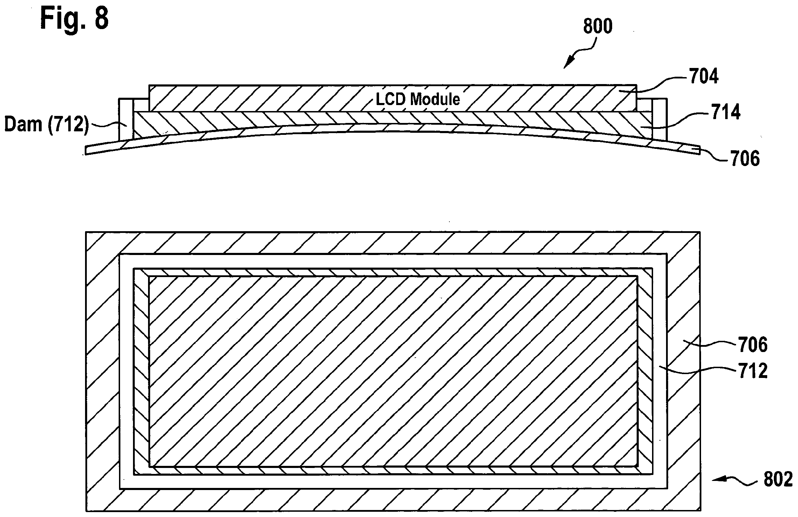

Fig. 8 shows a side view 800 and a top view 802 illustrating a step after the application of bonding material 714 illustrated in Fig. 7. That is, an LCD Module or display substrate 704 is placed on the uncured bonding material 714 with help of robotic grippers or placement members (not shown in Fig. 8) of an apparatus for optical bonding to hold the display substrate 704 while the bonding material 714 is curing. It is appreciated that the dam 712 can be made removable or stay as part of the display or display assembly, which is the final product.

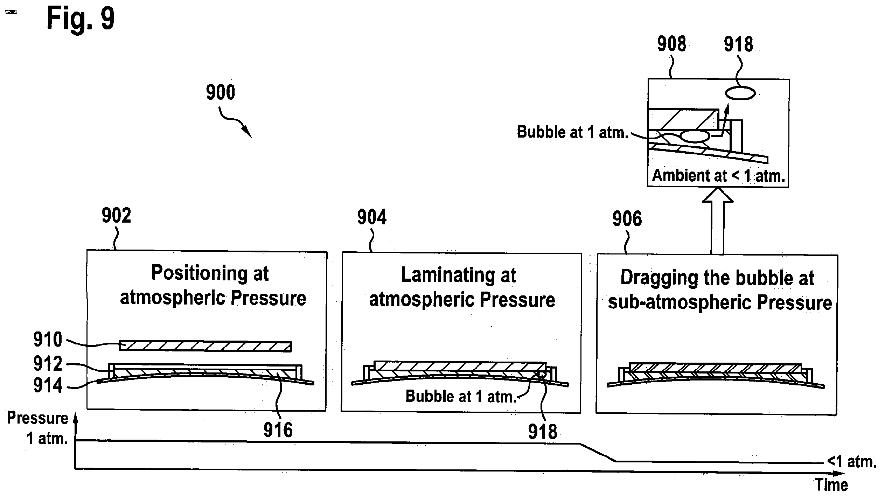

Fig. 9 shows a process or method to overcome a technical challenge to avoid air trapped i.e. formed or forming in a bonding material 916, in particular in liquid form, faced when adhering flat display substrate 910 onto a curved glass cover 914 with a dam 912 disposed on the cover 914. The process eliminates air bubbles, for instance, air bubble 918, by "dragging" or releasing the bubble through pressure differential where pressure difference is introduced in a chamber (not shown in Fig. 9 but understood to be a chamber where all the display assembly is placed inside the chamber for air extraction) to drag out the air trap. The chamber can be concealed, for example, like a vacuum chamber. Furthermore, the pressure in the chamber is made adjustable.

The process flow is as follows.

In step 902, the display substrate 910 is subjected to positioning at atmospheric pressure (1 atm.) by a placement member (not shown in Fig. 9) of an apparatus for optical bonding to place the display substrate 910 over the bonding material 916 already applied over the cover 914 with a dam 912 disposed on the cover 914.

In step 904 after step 902, the display substrate 910 is laminated i.e. placed over the bonding material 916 at atmospheric pressure. During the lamination, air bubbles 918 having air pressure at atmospheric pressure may be undesirably formed.

In step 906 after step 904, pressure of the environment inside the chamber is adjusted to sub-atmospheric (< 1 atm.) to help drag or release the air bubbles 918 in the bonding material 916. Drawing 908 in Fig. 9 is a zoom-in view showing air bubbles 918 having air pressure at atmospheric pressure being dragged or released to the environment (inside the chamber) outside the bonding material 916 as the environment is now having sub-atmospheric pressure.

Examples in the present disclosure yet not of the present invention can also provide an apparatus for optical bonding, the apparatus comprising: a bonding material dispenser for applying a bonding material on a cover with non-uniform surface to adhere the cover to a display substrate to form a display, the cover comprising at least one support member for supporting the bonding material disposed between the display substrate and the cover.

The apparatus, yet not part of the present invention, may comprise a placement member for placing the at least one support member to adhere the at least one support member onto the cover.

The apparatus, yet not part of the present invention, may comprise a chamber for subjecting the bonding material to pressure differential to release air trapped in the bonding material.

Examples in the present disclosure yet not of the present invention can also provide a display comprising: a display substrate; a cover with non-uniform surface adhered to the display substrate by a bonding material; at least one support member disposed on the cover for supporting the bonding material disposed between the display substrate and the cover.

Many modifications and other examples can be made to the method for optical bonding, by those skilled in the art having the understanding of the above described disclosure together with the drawings. Therefore, it is to be understood that the method for optical bonding, is not to be limited to the above description contained herein only, and that possible modifications are to be included in the claims.

## Claims

1. A method for optical bonding a cover with a curved surface to a rectangular flat display substrate to form a display, wherein the display comprises a rectangular shaped dam as a stick-on or built-in member on the cover, the method comprising:
applying a bonding material on the curved surface of the cover to adhere the cover to the flat display substrate to form the display, and
placing the display substrate on the uncured bonding material at atmospheric pressure, wherein the dam is used to contain the bonding material disposed between the display substrate and the cover,
**characterized in that** the display substrate is placed such that it is spaced from the rectangular shaped dam along its periphery when seen in a projection onto a plane parallel to the flat display substrate
wherein the method comprising: subjecting the bonding material to pressure differential to release air trapped in the bonding material, by adjusting the pressure of the environment to sub-atmospheric after the display substrate is placed on the bonding material.

2. The method as claimed in claim 1, wherein the dam is adhered to the cover.

3. The method as claimed in claim 1, wherein the dam is integral with the cover.

4. The method as claimed in claim 2, the method comprising:
adhering the dam onto the cover.

## Patentansprüche

1. Verfahren für optisches Bonden einer Abdeckung mit einer gekrümmten Fläche an ein rechteckiges flaches Display-Substrat zur Bildung eines Displays, wobei das Display einen rechteckförmigen Damm als ein Aufkleb- oder Einbau-Glied auf der Abdeckung umfasst, wobei das Verfahren Folgendes umfasst:
Aufbringen eines Bonding-Materials auf die gekrümmte Fläche der Abdeckung zum Kleben der Abdeckung an das flache Display-Substrat zur Bildung des Displays, und
Platzieren des Display-Substrats auf dem unausgehärteten Bonding-Material bei Atmosphärendruck, wobei der Damm dazu verwendet wird, das Bonding-Material zwischen dem Display-Substrat und der Abdeckung angeordnet zu halten,
**dadurch gekennzeichnet, dass** das Display-Substrat so platziert wird, dass es, in einer Projektion auf eine parallel zu dem flachen Display-Substrat verlaufende Ebene gesehen, entlang seinem Umfang von dem rechteckförmigen Damm beabstandet ist,
wobei das Verfahren Beaufschlagen des Bonding-Materials mit einer Druckdifferenz zur Freigabe von in dem Bonding-Material eingeschlossener Luft umfasst, indem der Druck der Umgebung nach der Platzierung des Display-Substrats auf dem Bonding-Material auf Unterdruck verstellt wird.

2. Verfahren nach Anspruch 1, wobei der Damm an die Abdeckung geklebt wird.

3. Verfahren nach Anspruch 1, wobei der Damm integral mit der Abdeckung ist.

4. Verfahren nach Anspruch 2, wobei das Verfahren Kleben des Damms an die Abdeckung umfasst.

## Revendications

1. Procédé de collage optique d'un recouvrement ayant une surface courbe à un substrat d'affichage plat rectangulaire afin de former un affichage, l'affichage comprenant une barrière de forme rectangulaire en tant qu'organe à coller ou intégré sur le recouvrement, le procédé comprenant :
l'application d'un matériau de collage sur la surface courbe du recouvrement afin de coller le recouvrement au substrat d'affichage plat pour former l'affichage, et
le positionnement du substrat d'affichage sur le matériau de collage non durci à pression atmosphérique, la barrière étant utilisée pour retenir le matériau de collage disposé entre le substrat d'affichage et le recouvrement,
**caractérisé en ce que** le substrat d'affichage est placé de manière à être espacé de la barrière de forme rectangulaire le long de sa périphérie, vu en projection sur un plan parallèle au substrat d'affichage plat,
le procédé comprenant : la soumission du matériau de collage à une différence de pression pour libérer de l'air piégé dans le matériau de collage, en ajustant la pression de l'environnement à une pression sous-atmosphérique après que le substrat d'affichage a été positionné sur le matériau de collage.

2. Procédé selon la revendication 1, dans lequel la barrière est collée au recouvrement.

3. Procédé selon la revendication 1, dans lequel la barrière est intégrée au recouvrement.

4. Procédé selon la revendication 2, le procédé comprenant :
le collage de la barrière sur le recouvrement.
